# EUROPÄISCHE PATENTSCHRIFT

(11) **EP 1 562 301 B1**
(45) Veröffentlichungstag und Bekanntmachung des Hinweises auf die Patenterteilung: **27.06.2007**
(21) Anmeldenummer: 05010362.1
(22) Anmeldetag: 15.01.1999
(51) Int. Cl.: H04B 1/707

(54) **Verfahren zum Empfangen oder Senden von Nachrichten**
Method for receiving or sending information
Procédé pour recevoir ou émettre des informations

(30) Priorität: 22.09.1998 DE 19843434
(43) Veröffentlichungstag der Anmeldung: 10.08.2005
(62) Teilanmeldung aus: 99907241.6
(73) Patentinhaber: SIEMENS AKTIENGESELLSCHAFT, 80333 München (DE)
(72) Erfinder: Michel, Jürgen, Dr., 81737 München (DE); Raaf, Bernhard, 82061 Neuried (DE)

(56) Entgegenhaltungen:
- EP-A- 0 795 971
- EP-A- 0 825 737
- EP-A- 0 838 910
- HIGUCHI K ET AL: "FAST CELL SEARCH ALGORITHM IN DS-CDMA MOBILE RADIO USING LONG SPREADING CODES" 1997 IEEE 47TH. VEHICULAR TECHNOLOGY CONFERENCE, PHOENIX, MAY 4 - 7, 1997, Bd. 3, Nr. CONF. 47, 4. Mai 1997 (1997-05-04), Seiten 1430-1434, XP000738598 INSTITUTE OF ELECTRICAL AND ELECTRONICS ENGINEERS ISBN: 0-7803-3660-7

## Beschreibung

Bei der digitalen Übertragung von Nachrichten zwischen einem Sender und einem Empfänger werden häufig sogenannte Spreizfolgen (spreading codes, Spreizcodes) verwendet. Wird ein Sendesignal mit einer solchen Spreizfolge umgetastet, wird die spektrale Breite des Sendesignals erhöht. Im Allgemeinen werden Spreizfolgen mit Zeittakten verwendet, deren Zeitkonstanten (Chips, TC) erheblich kleiner sind als die Pulsbreiten (T) des digitalen Nachrichtensignals. Ein Puls oder ein Symbol des digitalen Nachrichtensignals wird dann auf eine Vielzahl N von Chips der Spreizfolge aufgeteilt, wodurch die Bandbreite des Nachrichtensignals entsprechend vervielfacht wird.

Wichtige Beispiele solcher Übertragungsverfahren mit spektraler Spreizung (spread spectrum) sind die sogenannten Code Division Multiple Access (CDMA) Verfahren, die z.B. im Bereich der Mobiltelefonie oder der drahtlosen Datenübertragung eine immer bedeutendere Rolle spielen. Bei diesen Verfahren wird im Empfänger das gespreizte Signal mit einer passenden Spreizfolge korreliert. Da unterschiedliche, nicht äquivalente Spreizfolgen miteinander praktisch eine verschwindend geringe Korrelation aufweisen, ermöglicht dieses Verfahren die Detektion genau eines Nutzsignales aus einer Vielzahl von in dem gespreizten Signal enthaltenen Nutzsignalen, wobei alle anderen Nutzsignale, die im Sender mit anderen Spreizfolgen umgetastet wurden, im Empfänger wirksam unterdrückt werden. Als notwendige Voraussetzung hierfür wird allgemein angesehen, dass der Empfänger dieselbe Spreizfolge zur Korrelation verwendet, die auch zur Umtastung (Spreizung) des für ihn bestimmten Nutzsignales verwendet wurde (s. z.B. die Internationale Anmeldung WO 98/40972).

Vorrichtungen zur Durchführung solcher Verfahren sind im Allgemeinen recht aufwendig konstruiert. Weil eine große und ständig steigende Zahl von Nutzkanälen benötigt wird, werden die verwendeten Spreizfolgen recht lang und die entsprechenden Taktzeiten immer kürzer. Dies erfordert z.B. Korrelatoren entsprechender Komplexität und mit entsprechend hoher Taktrate.

Es ist eine Aufgabe der vorliegenden Erfindung, eine technische Lehre anzugeben, mit der der Aufwand für die Korrelation und allgemein für den Empfang gespreizter Signale verringert werden kann. Diese Aufgabe wird durch ein Verfahren gemäß einem der Patentansprüche gelöst.

Bei diesen Verfahren wird zum Empfang der übertragenen Nachrichten eine zweite Spreizfolge verwendet, die kürzer ist als die zur Umtastung des Nachrichtensignals im Sender verwendete erste Spreizfolge. Umfasst die erste Spreizfolge N Chips, kommt die zweite Spreizfolge mit M Chips aus, wobei M kleiner als N ist. Der Vorgang der Korrelation des gespreizten Signals mit der zweiten Spreizfolge im Empfänger wird hierdurch vereinfacht. Beim Senden von Nachrichten sieht die Erfindung die Verwendung geeigneter Spreizfolgen vor, mit denen die Orthogonalität der Spreizfolgen verschiedener Kanäle gewahrt werden kann.

Es sind zwar, z.B. aus der US-Patentschrift 5,673,260 (Method and System for CDMA Mobile Communication) vom 30. Sept. 1997, Systeme bekannt, bei denen zur Synchronisation des Empfängers mit dem Sender im Empfänger eine kürzere Spreizfolge als im Sender verwendet wird. Bei der Synchronisation werden jedoch sehr lange Synchronisationsdatensequenzen verwendet, die dem Empfänger exakt bekannt sind. Das Problem besteht hier also nicht in der Detektion der Daten (Nachrichten) sondern in der Ermittlung der passenden Zeitverzögerung zwischen Sender und Empfänger mit Hilfe bekannter Synchronisationsdaten. Die vorliegende Erfindung hingegen dient der Detektion von dem Empfänger unbekannten Daten. Werden hierbei verkürzte oder kürzere Spreizfolgen im Empfänger verwendet, unterscheidet sich diese Vorgehensweise und die dabei zu lösenden Probleme grundlegend von der Synchronisation mit verkürzten Spreizfolgen.

Vorteilhafte Weiterbildungen der Erfindung sind Gegenstand von nachgeordneten Patentansprüchen.

Eine Ausführungsmöglichkeit ist eine adaptive Anpassung der Spreizfolgenlänge an die jeweils herrschenden Empfangsverhältnisse vor. Dabei kann die Empfangsqualität mit Hilfe redundanter Codes bestimmt und gegebenenfalls verbessert werden. Die Verwendung geeigneter Spreizfolgen erlaubt Energieeinsparungen durch intermittierende Abschaltung oder langsamere Taktung bestimmter Hardwareeinheiten. Auf der Sendeseite können die Spreizfolgen gemäß der Erfindung so gewählt werden, dass eine (praktisch ausreichende) Orthogonalität der kurzen Spreizfolgen gewährleistet ist.

Im folgenden wird die Erfindung anhand bevorzugter Ausführungsbeispiele und mit Hilfe der Figuren näher erläutert.

Figur 1 zeigt in schematischer Darstellung eine bevorzugte Wahl kurzer Spreizfolgen, die einen besonders energiesparenden Betrieb des Empfangsgerätes ermöglicht.

Figur 2 zeigt in schematischer Darstellung eine bevorzugte Auswahl von Spreizfolgen, mit der die Orthogonalität der Spreizfolgen verschiedener Kanäle sichergestellt werden kann.

Bei einem nach dem Prinzip der Bandspreiztechnik (spread spectrum) ausgeführten Übertragungssystem werden die Datensymbole über den Übertragungskanal wie im Folgenden erläutert übertragen. Das Sendesignal, z.B. aus Rechteckimpulsen der Dauer T bestehend, wird durch eine schnelle erste Spreizfolge der Länge T=N*TC umgetastet. Dabei ist TC die Chipdauer der Spreizfolge (spreading code). Sie ist viel kleiner als T, so dass das Signal breitbandig wird. Idealerweise entsteht ein weißes breitbandiges Signal, das über den Mehrwegekanal mit Signallaufzeiten {tk} übertragen und im Empfänger detektiert wird.

Für den Zugriff mehrerer Nutzer werden zueinander orthogonale Spreizfolgen verwendet. Für jeden Nutzkanal wird eine eigene Spreizfolge verwendet, der zu den anderen Spreizfolgen orthogonal ist, d.h. dessen Korrelation mit den anderen Spreizfolgen (wenigstens praktisch) verschwindet. Daher können alle Nutzkanäle gleichzeitig über ein einziges breites Frequenzband übertragen werden und zum Empfänger gelangen.

Im Empfänger wird das Empfangssignal zur Detektion des Sendesignals mit der gleichen, allerdings um tK ∈{tk} verzögerten Spreizfolge korreliert. Diese Operation bezeichnet man auch als Entspreizung. Die einzelnen Teilnehmer werden mit Kenntnis der spezifischen orthogonalen Spreizfolge selektiert. Außerdem werden die Pfade mit den Laufzeiten tk ≠ tK unterdrückt, da eine zeitverschobene Spreizfolge im allgemeinen weder mit anderen Spreizfolgen noch mit sich selbst (nennenswert) korreliert. Anders interpretiert stellt der Empfänger ein an den jeweiligen Nutzkanal und an den Sender signalangepasstes Filter dar. Durch die Korrelation gelingt die eindeutige Identifizierung des Senders auch im Falle eines geringen Signal-/Rauschverhältnisses.

Die Detektion erfolgt sobald ein Datenbit empfangen worden ist. Sie kann von leistungsfähigen Verfahren wie Deinterleaving oder einer Kanaldekodierung mittels Viterbi Algorithmus unterstützt werden. Dabei wird die Redundanz eines zur Kanalcodierung verwendeten Codes, der möglicherweise auch eine Fehlerkorrektur erlaubt, auf dem Wege einer schrittweisen statitischen Schätzung der Datenbits, z.B. mit einem maximum aposteriori probability (MAP) Schätzverfahren, zur Schätzung und bzw. oder Verbesserung der Empfangsqualität verwendet. Derartige Verfahren sind dem Fachmann grundsätzlich bekannt. Ihr Einsatz im Zusammenhang mit der vorliegenden Erfindung bereitet dem Fachmann nach der Lektüre der vorliegenden Beschreibung der Erfindung keine Schwierigkeiten.

Sind diese Verfahren genügend leistungsfähig oder ist der Signal-/Rauschabstand genügend groß, so lässt sich die Nutzinformation auch dann rekonstruieren (detektieren), wenn man die Korrelation nicht mit der jeweils passenden, nutzerspezifischen ersten Spreizfolge der Länge N*TC durchführt, die auch im Sender verwendet wurde. Dies ist eine grundlegende Idee, auf der die vorliegende Erfindung basiert. Man kann nämlich statt dessen auch eine verkürzte oder kürzere zweite Spreizfolge der Länge M*TC mit M<N einsetzen und anstatt N Chips nun lediglich M Chips in die Signalverarbeitung mit einbeziehen.

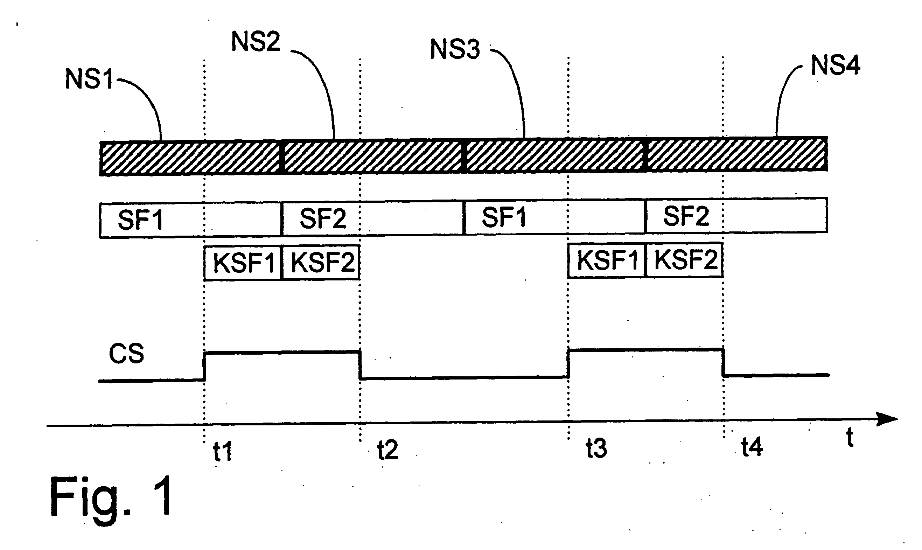

Hierdurch ist eine entsprechende Einsparung von Hardwareressourcen und Energie möglich. Denn man kann bei geeigneter Wahl einer verkürzten oder kürzeren Spreizfolge, die z.B. eine - äquidistant oder nicht äquidistant - unterabgetastete Teilfolge der im Sender verwendeten Spreizfolge sein kann, Systeme mit entsprechend geringeren Taktraten oder weniger leistungsfähige und stromsparendere Prozessoren einsetzen. Verwendet man andererseits verkürzte Spreizfolgen, die zusammenhängende Teilstücke der im Sender verwendeten Spreizfolgen sind, kann man Hardwareeinheiten intermittierend abschalten und so Energie sparen. Dies geht besonders vorteilhaft, wenn man verkürzte Spreizfolgen für zwei aufeinanderfolgende Symbole einer zu detektierenden Nachricht so wählt, dass eine Abschaltung einzelner Einrichtungen einer Empfangseinheit über möglichst lange zusammenhängende Zeiträume möglich ist. Dies lässt sich - wie in Figur 1 gezeigt - am einfachsten realisieren, wenn man ein Paar von verkürzten Spreizfolgen verwendet, dessen zeitlich erste Spreizfolge (KSF1) mit dem Ende der entsprechenden unverkürzten Spreizfolge (SF1) übereinstimmt und dessen zeitlich zweite Spreizfolge (KSF2) mit dem Anfang der entsprechenden unverkürzten Spreizfolge (SF2) übereinstimmt.

Neben verkürzten Spreizfolgen im eigentlichen Wortsinn, die echte Teilfolgen, z.B. (a1, a4, a6, a7, a10, a11, a34, ...), einer unverkürzten Spreizfolge, z.B. (a1, a2, a3, a4, a5, a6, a7, ...), sind, können auch andere kurze Spreizfolgen verwendet werden, die als Teilfolgen, z.B. (b1, b3, b5, b7, b9, ...), einer anderen unverkürzten Spreizfolge, z.B. (b1, b2, b3, b4, b5, b6, ...), aufgefasst werden können, die allerdings eine genügend große Kreuzkorrelation, im Wesentlichen proportional zu (a1+b1, a2+b2, a3+b3, a4+b4, ...), miteinander aufweisen müssen, damit der gewünschte Nachrichtenkanal mit ausreichendem Signal-/Rauschverhältnis detektiert werden kann und andere Nachrichtenkanäle hinreichend unterdrückt werden können. Wenn im Rahmen der Beschreibung dieser Erfindung von einer verkürzten Spreizfolge die Rede ist, um die Diktion nicht zu unübersichtlich werden zu lassen, sollen daher immer auch solche allgemeineren, besser als kürzere oder kurze Spreizfolgen zu bezeichnende Spreizfolgen gemeint sein, wenn nicht ausdrücklich das Gegenteil gesagt wird. Ebenso müssen Spreizfolgen im Allgemeinen natürlich nicht mit anderen Spreizfolgen im strikten Sinne des Wortes übereinstimmen, um eine sachdienliche Korrelation zu ermöglichen; es genügt vielmehr in den meisten Fällen eine ausreichend hohe Kreuzkorrelation. Auch dies gilt es beim Lesen dieser Beschreibung stets zu berücksichtigen, wenn aus Gründen der leichteren Lesbarkeit in dieser Beschreibung stellenweise einfach nur von einer (u.U. auch nur teilweisen) Übereinstimmung zweier Spreizfolgen die Rede ist.

Nach dem Empfang eines mit Hilfe der Bandspreiztechnik übertragenen Bits oder Symbols der Länge N*TC wird die Entspreizung gestartet. Bei ausreichendem Signal-/Rauschverhältnis lässt sich daraus durch Korrelation mit der verkürzten spezifischen Spreizfolge der Länge M*TC im Allgemeinen das gesendete Symbol sowie die gesendeten Nutzdaten komplett rekonstruieren. Dies wird durch Ausnutzung der bei der Kanalcodierung implementierten Redundanz erleichtert. Daraus resultiert eine Einsparung, weil nicht alle gesendeten Chips empfangen und verarbeitet werden müssen.

Sollte die Rekonstruktion der Nutzdaten wider Erwarten, z.B. wegen einer zu schlechten Empfangsqualität, nicht möglich sein, können die Daten durch erneute Korrelation mit einer gegebenenfalls längeren Spreizfolge präzisiert werden. Dazu sind weitere Chips mit in die Korrelation einzubeziehen. Ergebnisse vorheriger Durchläufe können ausgenutzt werden. Als Entscheidungsgrundlage für den Zustand des jeweils gesendeten Bits kann die Bewertung des Signal-/Rauschabstandes oder der Ergebnisse der statistischen Schätzung bei der Kanaldecodierung sein. Mit Kenntnis der Übertragungsqualität kann auch eine Abschätzung für die Mindestlänge der verkürzten Spreizfolge abhängig von der geforderten Zuverlässigkeit getroffen werden.

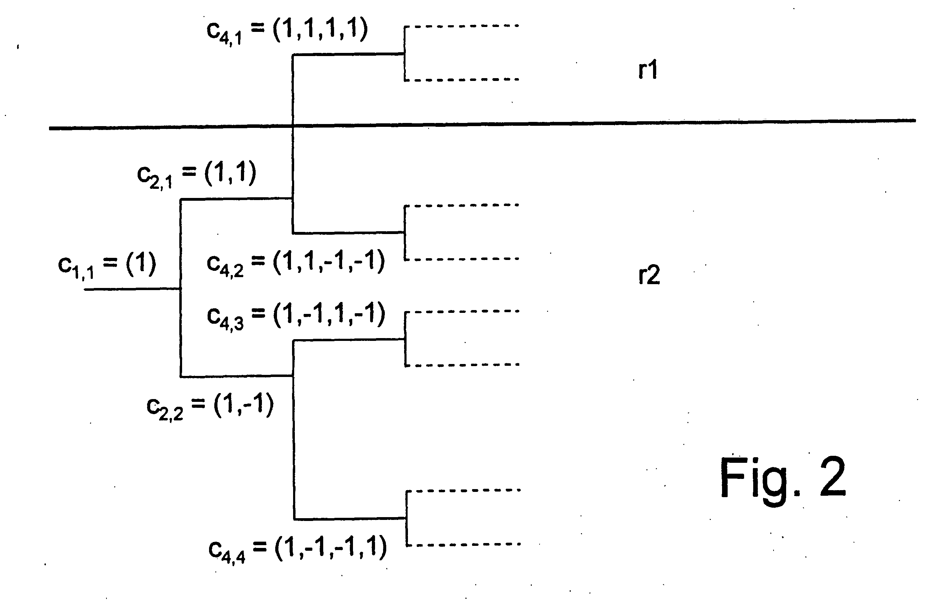

Durch die Verwendung kürzerer Spreizfolgen verringert sich die Anzahl zueinander orthogonaler Spreizfolgen. Deshalb ist es vorteilhaft, den Modus und die Reihenfolge der Zuweisung der Spreizfolgen an die Nutzer bzw. an die logischen Kanäle sinnvoll vorzugeben bzw. bestimmte Spreizfolgen innerhalb einer Funkzelle nicht zu nutzen. Beispielsweise könnte - wie in Figur 2 dargestellt - vorgesehen werden, dass diejenige Spreizfolge, deren erste Hälfte mit der Spreizfolge des Paging-Kanals übereinstimmt, im System nicht oder erst als letzte verwendet wird.

Dieses Prinzip ist insbesondere für den sogenannten Paging Modus und den sogenannten Broadcast-Kanal (BCCH) anwendbar. Dort wird ein Signal an mehrere Mobilstationen, die sich in einer Funkzelle befinden, gesendet. Um sicherzustellen, dass dieses Signal von allen Mobilstationen empfangen werden kann, muss es mit verhältnismäßig hoher Leistung gesendet werden. Die meisten Mobilstationen befinden sich in einer günstigen Position, in der die Empfangsqualität genügend gut ist, und können das hier beschriebene Verfahren der Korrelation mit kürzeren Spreizfolgen anwenden, ohne die Nachricht zu verpassen. Die damit verbunden Stromeinsparung ist im Paging Modus besonders wichtig, da sie direkt und besonders spürbar zur Verlängerung der Stand-by-Zeit beiträgt.

Zur intermittierenden Abschaltung eignen sich besonders Analog-/Digitalwandler und Korrelatoren. Dies ist besonders vorteilhaft im Zusammenhang mit der in Figur 1 gezeigten Wahl von Spreizfolgen. Für die Variante der Taktung mit geringerer Taktfrequenz sind unterabgetastete Teilfolgen besonders geeignet. Dem Fachmann ist anhand dieser Beschreibung klar, dass beide Maßnahmen auch kombiniert zum Einsatz kommen können.

Wie in Figur 1 schematisch dargestellt, werden zur Umtastung (Spreizung) der zeitlich aufeinander folgenden Nachrichtensymbole (Daten, Bits, Codewörter, oder ähnliches) NS1, NS2, NS3, NS4, im Sender die ersten Spreizfolgen SF1 und SF2 verwendet. Benutzt man im Empfänger nun die kurzen oder verkürzten Spreizfolgen KSF1 und KSF2, die zeitlich so plaziert sind, daß das Steuersignal CS für die Steuerung der ein- und auszuschaltenden Hardware-Einrichtungen nur zu den Zeiten t1 und t3 eingeschaltet und zu den Zeiten t2 und t4 ausgeschaltet werden muß. Bei einer zeitlich nicht zusammenhängenden Plazierung der kurzen Spreizfolgen KSF1 und KSF2 müsste das Steuersignal schneller umgetastet werden, wodurch ein größerer Energieverbrauch verursacht würde.

Figur 2 veranschaulicht die Zusammenhänge bei der Auswahl geeigneter Spreizfolgen. Diese lassen sich in einem sogenannten Code-Baum systematisch darstellen, der mit zunehmender Länge der Spreizfolgen eine exponentiell wachsende Zahl von orthogonalen Spreizfolgen zur Verfügung stellt. Da andere Arten oder Systematiken von Spreizfolgen, die letztlich im Wesentlichen äquivalent sind, dem Fachmann bekannt sind, wird hier nur diese Art von Spreizfolgen behandelt. Die Erfindung kann aber mit anderen Arten von Spreizcodes ebenso gut ausgeführt werden. Um zu verhindern, dass durch eine Verwendung kürzerer oder verkürzter Spreizfolgen ein Verlust der Orthogonalität eintritt, ist es sinnvoll, die Spreizfolgen im Bereich r1 für den Paging-Kanal zu reserviern und nur die Spreizfolgen aus dem Bereich r2 für die Spreizung von individuellen Nutzerkanälen zu verwenden.

## Patentansprüche

1. Verfahren zum Senden von Nachrichten in Form eines mit Hilfe einer ersten Spreizfolge spektral gespreizten Signals an eine Mehrzahl von Empfängern, die zur Detektion der Nachrichten das empfangene Signal jeweils mit einer zweiten Spreizfolge korrelieren, welche kürzer ist als die erste Spreizfolge, und bei dem
a) Nachrichtensignale für einzelne Empfänger mit für jeden Empfänger individuell verschiedenen ersten Spreizfolgen spektral gespreizt werden,
b) Nachrichtensignale, die für eine Gruppe von Empfängern bestimmt sind, mit einer allen Empfängern dieser Gruppe gemeinsamen ersten Spreizfolge spektral gespreizt werden, und bei dem
c) die individuell verschiedenen ersten Spreizfolgen so gewählt werden oder gewählt sind, dass die zu diesen individuell verschiedenen ersten Spreizfolgen gehörenden zweiten Spreizfolgen eine möglichst geringe Korrelation mit einer Spreizfolge aufweisen, die für diese Gruppe von Empfängern verwendet wird.

2. Verfahren zum Senden von Nachrichten, nach Anspruch 1, an eine Mehrzahl von Empfängern, bei dem eine Spreizfolge, deren zugehörige verkürzte Spreizfolge mit der Spreizfolge eines Paging-Kanals eine nicht geringe Kreuzkorrelation aufweist, nicht oder nur dann verwendet wird, wenn keine andere Spreizfolge mehr zur Verfügung steht.

## Claims

1. Method for sending messages in the form of a spread-spectrum signal using a first spreading code to a plurality of receivers which, for the purpose of detecting the messages, correlate the received signal with a respective second spreading code which is shorter than the first spreading code, and in which
a) message signals for individual receivers are subjected to spectral spreading using first spreading codes which are individually different for each receiver,
b) message signals which are intended for a group of receivers are subjected to spectral spreading using a first spreading code which is common to all receivers in this group, and in which
c) the individually different first spreading codes are or have been chosen such that the second spreading codes associated with these individually different first spreading codes have as little correlation as possible with a spreading code which is used for this group of receivers.

2. Method for sending messages, according to Claim 1, to a plurality of receivers, in which a spreading code whose associated shortened spreading code has a not insubstantial cross-correlation with the spreading code of a paging channel is not used or is used only if there is no other spreading code available.

## Revendications

1. Procédé pour émettre des informations, sous forme d'un signal étalé de manière spectrale à l'aide d'une première séquence d'étalement, à une pluralité de récepteurs qui, pour la détection des informations, corrèlent le signal reçu respectivement à l'aide d'une deuxième séquence d'étalement, laquelle est plus courte que la première séquence d'étalement, et dans lequel
a) des signaux de communication pour des récepteurs individuels sont étalés à l'aide de premières séquences d'étalement individuellement différentes pour chaque récepteur,
b) des signaux de communication qui sont destinés à un groupe de récepteurs, sont étalés de manière spectrale à l'aide d'une première séquence d'étalement commune à tous les récepteurs de ce groupe,
c) les premières séquences d'étalement individuellement différentes ont été ou sont sélectionnées de telle manière que les deuxièmes séquences d'étalement appartenant à ces premières séquences d'étalement individuellement différentes présentent une corrélation la plus petite possible avec une séquence d'étalement qui est utilisée pour ce groupe de récepteurs.

2. Procédé pour émettre des informations, selon la revendication 1, à une pluralité de récepteurs, dans lequel une séquence d'étalement, dont la séquence d'étalement raccourcie correspondante présente une corrélation mutuelle non moindre avec la séquence d'étalement d'un canal de recherche, n'est pas utilisée ou n'est utilisée que lorsque aucune autre séquence d'étalement n'est plus disponible.
